# FASCICULE DE BREVET EUROPEEN

(11) **EP 0 729 635 B1**
(45) Date de publication et mention de la délivrance du brevet: **22.04.1998**
(21) Numéro de dépôt: 95901473.9
(22) Date de dépôt: 09.11.1994
(51) Int. Cl.: G21C 15/18

(54) **REACTEUR NUCLEAIRE COMPORTANT UN DISPOSITIF DE REFROIDISSEMENT DE SECOURS ET PROCEDE DE REFROIDISSEMENT**
KERNREAKTOR MIT NOTKÜHLSYSTEM UND VERFAHREN ZUR KÜHLUNG
NUCLEAR REACTOR COMPRISING AN EMERGENCY COOLING SYSTEM AND COOLING METHOD

(30) Priorité: 15.11.1993 US 151453
(43) Date de publication de la demande: 04.09.1996
(73) Titulaire: FRAMATOME, 92400 Courbevoie (FR)
(72) Inventeur: CARLTON, James, D., Lynchburg, VA 24502 (US); KANE, Edward, R., Forest, VA 24551 (US); PARECE, Martin, V., Lynchburg, VA 24502 (US)
(74) Mandataire: Bouget, Lucien
(86) Numéro de dépôt international: FR9401313
(87) Numéro de publication internationale: WO9514300

(56) Documents cités:
- EP-A- 0 344 041
- DE-A- 2 400 055
- FR-A- 2 280 953
- FR-A- 2 345 643
- US-A- 3 847 735
- US-A- 5 135 708
- US-A- 5 178 821
- PATENT ABSTRACTS OF JAPAN vol. 16, no. 216 (P-1356) 21 Mai 1992 & JP,A,04 040 397

## Description

L'invention est relative à un réacteur nucléaire comportant un dispositif de refroidissement de secours et un procédé de refroidissement qui peuvent être mis en oeuvre en particulier pour refroidir le coeur d'un réacteur nucléaire à la suite d'un accident se traduisant par une perte de fluide de refroidissement.

Dans le cadre de la production d'énergie d'origine nucléaire, les réacteurs nucléaires doivent être conçus de manière à pouvoir faire face à divers accidents considérés comme envisageables.

L'accident potentiel le plus inquiétant sinon le plus important qu'on cherche à éviter est probablement l'accident de perte de réfrigérant primaire (APAP/LOCA) survenant dans le réacteur nucléaire. Cet accident est susceptible de se produire dans le cas de l'apparition d'une brèche dans le circuit de refroidissement du réacteur entraînant une chute de pression ainsi qu'une perte de réfrigérant. Comme on peut l'imaginer facilement, en l'absence de tout réfrigérant dans le coeur du réacteur, le coeur s'échauffe de manière à entraîner des dommages importants non seulement à la structure du réacteur mais encore à son environnement.

La principale méthode pour réduire les conséquence d'un tel accident est de noyer le réacteur avec du fluide réfrigérant. Cette intervention doit être effectuée aussi rapidement que possible après la perte de pression dans le circuit de refroidissement, de manière à absorber la chaleur qui s'accumule dans le coeur pendant l'accident de perte de réfrigérant. Cette intervention nécessite généralement des réservoirs de stockage de réfrigérant de secours disposés à proximité et qui sont reliés à la tuyauterie du réacteur. Dans certains cas, ces réservoirs sont sous pression et dans d'autres cas des pompes sont prévues pour fournir le réfrigérant au réacteur. Ce réfrigérant de secours est injecté dans la tuyauterie du réacteur, par exemple dans une branche chaude ou une branche froide, à travers la paroi de la cuve du réacteur au voisinage de la partie supérieure de la cuve ou au moyen de dispositifs comportant des tuyauteries, dans la zone du plenum au-dessus du coeur du réacteur. Cependant, l'un des inconvénients majeurs d'une injection dans la tuyauterie du réacteur est que la brèche est susceptible d'empêcher le fluide d'atteindre le coeur du réacteur. Un autre inconvénient des conceptions existantes est que, très rapidement au cours de l'accident de perte de réfrigérant, une vaporisation éclair dans la partie inférieure de la cuve empêche le réfrigérant normal, qui se trouve dans la cuve, d'atteindre le coeur. Un troisième inconvénient est que la vapeur produite dans le coeur agit pour empêcher du réfrigérant de secours additionnel d'atteindre le coeur.

Il est habituel de prévoir des réservoirs de noyage du coeur d'un réacteur nucléaire pour fournir du réfrigérant de secours à la cuve du réacteur nucléaire pendant un accident de perte de réfrigérant. Cependant, dans le cas d'installations de réacteur nucléaire actuellement en service, l'intervention se situe pendant l'accident de perte de réfrigérant à un moment tel que la vaporisation éclair dans toutes les parties de la cuve du réacteur nucléaire se produit avant l'introduction du réfrigérant de secours. Le terme "vaporisation éclair" est un terme généralement utilisé pour décrire la vaporisation d'un liquide à haute température et sous pression, lorsque ce liquide est dépressurisé rapidement. Ceci se produit dans un réacteur nucléaire, lorsqu'à la suite d'une rupture de la tuyauterie de refroidissement normal du réacteur, le fluide de refroidissement normal est soumis à une pression fortement réduite, le fluide de refroidissement normal du réacteur étant éjecté au niveau de la rupture. En fonction de la température et de la pression, une telle vaporisation éclair et la perte de fluide réfrigérant normal peuvent se produire en quelques secondes.

Il est important de fournir du réfrigérant de secours au réacteur aussi rapidement que possible pour limiter l'élévation de température du coeur qui se produit toutes les fois que la vaporisation éclair et l'ébullition du réfrigérant se produisent dans le coeur. Il est de la plus haute importance de fournir le réfrigérant de secours à l'entrée du coeur après une telle dépressurisation rapide, de manière à assurer un écoulement continu de réfrigérant vers le coeur pour limiter au maximum ou empêcher l'élévation de température du coeur. C'est aussi le but du réfrigérant de secours d'empêcher ou de limiter au maximum la réduction de la quantité de fluide de refroidissement normal présent dans le plenum inférieur et dans l'espace annulaire vertical de la cuve du réacteur, du fait de la vaporisation éclair.

On connaît des réacteurs nucléaires comportant des dispositifs de refroidissement de secours permettant d'injecter le réfrigérant de secours à l'intérieur de la cuve, à l'entrée du coeur, c'est-à-dire dans la partie inférieure de la cuve, en-dessous du coeur. Le réfrigérant de secours est fourni par un réservoir de secours qui permet de réaliser l'injection dès que la pression à l'intérieur de la cuve, dans la zone d'injection, devient inférieure, du fait de la dépressurisation à la suite d'une rupture, à la pression du réfrigérant dans le réservoir de secours.

La pression sous laquelle est maintenu le réfrigérant dans le réservoir de secours détermine la rapidité d'intervention du dispositif de refroidissement de secours après un accident tel qu'un accident de perte de réfrigérant.

De manière à permettre une intervention la plus rapide possible du dispositif de refroidissement de secours pour assurer le renoyage du coeur et éviter l'assèchement du réfrigérant par le phénomène de vaporisation éclair, il est nécessaire de prévoir un réservoir de stockage de fluide réfrigérant à haute pression. Un tel réservoir présente un volume limité, si bien que le réservoir se vide très rapidement et que le dispositif de refroidissement de secours par injection de réfrigérant à l'intérieur de la cuve n'intervient que pendant une période trop courte pour assurer un refroidissement efficace du réacteur nucléaire.

On a également proposé des dispositifs de refroidissement comportant des réservoirs de stockage à des pressions différentes reliés aux branches du circuit primaire du réacteur constituant le dispositif de refroidissement normal. En cas de rupture d'une branche du circuit primaire, de tels dispositifs peuvent s'avérer inefficaces, du fait que le réfrigérant introduit dans le circuit primaire est susceptible d'être éjecté du circuit primaire au niveau de la brèche créée par la rupture de la branche du circuit primaire. De ce fait, le réfrigérant de secours ne peut pénétrer dans la cuve et venir en contact avec le coeur du réacteur nucléaire pour en assurer le refroidissement.

Le but de l'invention est donc de proposer un réacteur nucléaire comportant une cuve ayant une pluralité d'ouvertures d'entrée et de sortie et une enveloppe de coeur à l'intérieur de la cuve ainsi qu'un dispositif de refroidissement de secours permettant d'effectuer, à la suite d'un accident tel qu'un accident de perte de réfrigérant, une injection de fluide de refroidissement de secours très rapidement après le début de l'accident ainsi qu'un refroidissement ultérieur du coeur, par injection du fluide de refroidissement de secours à l'intérieur de la cuve, de manière différée et prolongée.

Dans ce but, le réacteur nucléaire suivant l'invention est conforme à l'objet de la revendication 1.

L'invention est également relative à un procédé de refroidissement de secours d'un réacteur nucléaire consistant à injecter à l'intérieur de la cuve du réacteur nucléaire, un fluide de refroidissement de secours, successivement à aux moins deux pressions différentes, à la suite d'un accident tel qu'un accident de perte de réfrigérant, selon l'objet de la revendication 9.

De manière plus particulière, le dispositif et le procédé suivant l'invention sont conçus de manière à permettre une fourniture de réfrigérant de secours, de manière séquentielle, à partir de différentes sources de réfrigérant passives ou actives et sans utiliser le circuit de refroidissement normal du réacteur.

Dans un tel mode de réalisation, un réservoir à haute pression fournit dans un premier temps du réfrigérant de secours au réacteur nucléaire. Un réservoir à basse pression commence à fournir du réfrigérant de secours au coeur du réacteur juste avant que le réservoir à haute pression ne se soit vidé. Un réservoir d'alimentation par gravité qui se trouve à l'intérieur du bâtiment du réacteur commence à fournir du réfrigérant de secours au coeur du réacteur peu de temps avant que le réservoir à basse pression ne se soit vidé. Pendant que le réservoir d'alimentation par gravité se vide, le réfrigérant récupéré par un puisard à l'intérieur du bâtiment du réacteur est pompé, de manière à être injecté dans le coeur du réacteur. La cuve du réacteur peut comporter une ou plusieurs tubulures d'injection de réfrigérant de secours à un niveau situé au-dessus de la partie supérieure du coeur. La cuve du réacteur peut également comporter un canal le long de la partie externe de l'enveloppe de coeur qui dirige le réfrigérant de secours vers la base du coeur. On peut utiliser des clapets, des casse-siphons et des dispositifs de limitation de débit pour évacuer rapidement la vapeur dans le cas de l'apparition de la vaporisation éclair et pour limiter au maximum une perte de réfrigérant dans le réacteur. Les dispositifs comportant des soupapes de dépressurisation actionnées automatiquement peuvent être montés sur un pressuriseur ou dans chacune des branches chaudes du circuit primaire d'un réacteur nucléaire à eau sous pression et ou sur la tubulure de vapeur de chacun des générateurs de vapeur pour contribuer à réduire la pression dans le circuit primaire à une valeur suffisamment basse pour que le réfrigérant de secours puisse s'écouler dans le circuit de refroidissement primaire du réacteur à partir du réservoir d'alimentation par gravité.

Le procédé et l'installation selon l'invention permettent en particulier d'envoyer le réfrigérant de secours dans le coeur et de prélever la chaleur du coeur de manière à réduire au maximum ou à éliminer les élévations de température dans le coeur pendant l'accident de perte de réfrigérant. En outre, les moyens de fourniture du fluide réfrigérant de refroidissement dans le cas de l'invention n'ont aucune interférence avec le circuit de refroidissement normal du réacteur et n'utilisent pas ce circuit qui est utilisé pendant le fonctionnement du réacteur. L'invention permet également d'envoyer du fluide de refroidissement dans le coeur d'une manière séquentielle, pour empêcher la vaporisation éclair de réfrigérant existant qui est encore disponible pour le refroidissement du coeur.

De manière à bien faire comprendre l'invention, on va maintenant décrire, en se référant aux figures jointes en annexe, un mode de réalisation d'un réacteur nucléaire à eau sous pression, suivant l'invention comportant un dispositif de refroidissement de secours et le fonctionnement du dispositif de secours dans le cas d'un accident de perte de réfrigérant primaire (APRP).

La figure 1 est une vue schématique d'un réacteur nucléaire suivant l'invention.

La figure 2 est une vue en coupe verticale partielle de la cuve du réacteur.

La figure 3 est une vue en coupe détaillée montrant une tubulure d'injection de réfrigérant de secours dans le réacteur nucléaire.

La figure 4 est une vue en coupe détaillée montrant la tubulure d'une branche froide du réacteur nucléaire.

La figure 5 est une vue en perspective éclatée de la partie interne de la cuve du réacteur nucléaire.

La figure 6 est une vue en coupe montrant un clapet monté dans la cuve du réacteur nucléaire.

La figure 7 est une vue suivant 7-7 de la figure 6.

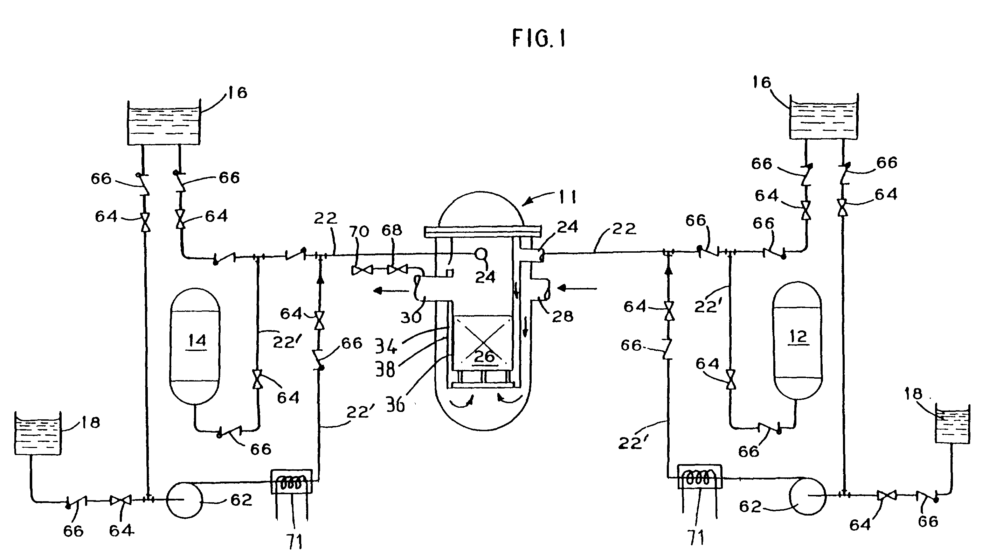

De manière générale, le dispositif de refroidissement du réacteur suivant l'invention représenté sur la figure 1 comporte des réservoirs de stockage de fluide réfrigérant de secours 12, 14 et 16, des puits de récupération 18 et des moyens passifs 66 constitués par des clapets intercalés sur des canalisations reliées aux réservoirs de stockage pour fournir le réfrigérant de secours de manière séquentielle et passive à la cuve 11 du réacteur à partir des réservoirs de stockage 12, 14 et 16 ainsi que des pompes motorisées 62 pour fournir de manière active du réfrigérant de secours à la cuve du réacteur, à partir des puits de récupération 18. Des vannes d'isolation motorisées 64 sont normalement complétement ouvertes lorsque le réacteur est à sa température et à sa pression de fonctionnement normal, l'isolement des réservoirs de stockage 12, 14, 16 et du puits de récupération 18 par rapport au circuit de refroidissement du réacteur étant assuré par les clapets 66.

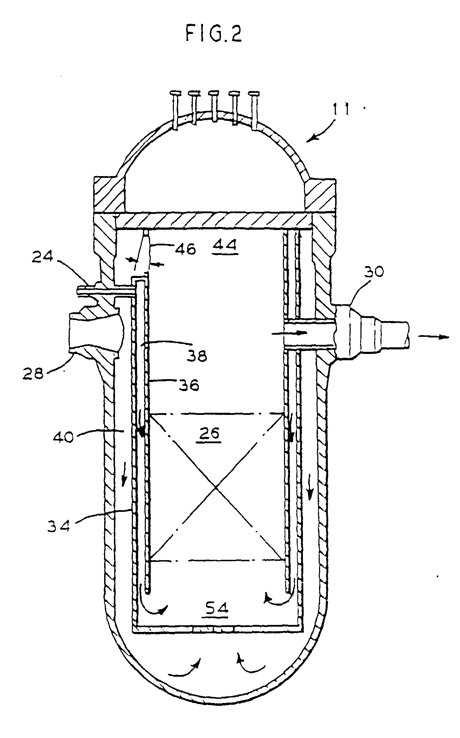

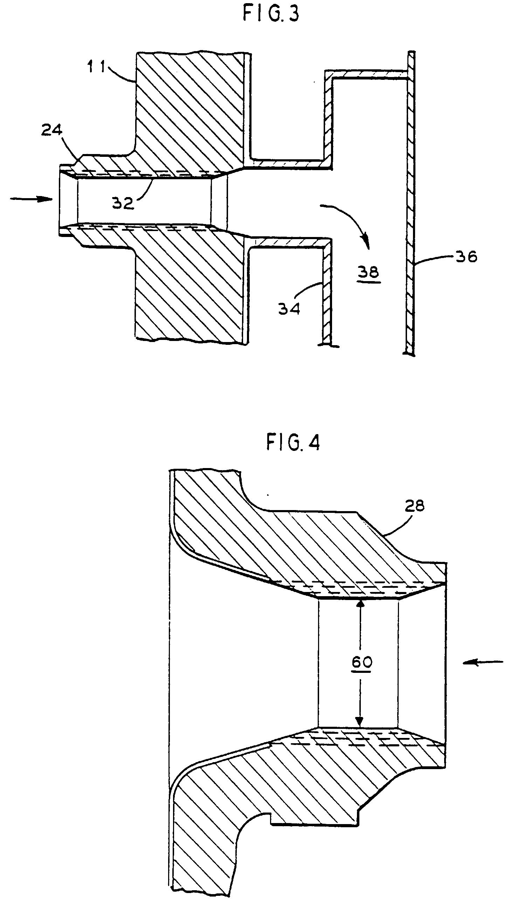

La cuve 11 du réacteur nucléaire est pourvue de moyens lui permettant de recevoir le réfrigérant de secours pendant un accident de perte de réfrigérant primaire. Le réfrigérant de secours provenant des différents réservoirs de stockage et du puits de récupération peut être fourni à des tubulures d'injection 24 fixées sur la cuve du réacteur 11 par l'intermédiaire de lignes 22 d'alimentation en réfrigérant de secours. Les lignes d'alimentation de réfrigérant 22 et les tubulures d'injection 24 mettent en communication les réservoirs de stockage 12, 14 et 16 et le puits de récupération 18 avec la cuve du réacteur nucléaire 11 et sont destinées en particulier à fournir du réfrigérant de secours pendant un accident de perte de réfrigérant primaire. Ceci permet d'éliminer les inconvénients rencontrés lorsqu'on tente de fournir le réfrigérant de secours par l'intermédiaire des canalisations de refroidissement normal du réacteur en fonctionnement, quand l'accident de perte de réfrigérant primaire est dû à une rupture d'une canalisation du circuit de refroidissement normal du réacteur. Les tuyères d'injection 24 constituent le moyen d'introduction du réfrigérant de secours dans la cuve du réacteur nucléaire ; quatre tuyères 24 peuvent être utilisées dans le cadre d'un mode de réalisation préférentiel, mais le nombre de tuyères nécessaires dépend de la taille de la cuve du réacteur et de sa conception. Comme représenté plus en détail sur la figure 2, chaque tuyère 24 est disposée à un certain niveau au-dessus du sommet du coeur du réacteur 26. Deux tubulures 24 sont montrées comme étant situées au-dessus de l'entrée 28 d'une branche froide et au-dessus de la sortie 30 d'une branche chaude mais ces tubulures pourraient être situées également en-dessous de ces entrée et sortie, pourvu qu'elles se trouvent au-dessus du coeur 26. Chacune des tubulures d'injection 24 comporte un orifice 32 de restriction de débit montré sur la figure 3. L'orifice à section réduite limite la section d'écoulement, de telle sorte que dans le cas d'un accident de perte de réfrigérant primaire produit par une rupture d'une ligne d'alimentation 22 de réfrigérant de secours, le débit de fuite est rendu minimum.

Un cylindre 34 à section circulaire visible sur les figures 2 et 5 est placé autour de l'enveloppe de coeur 36. Celui-ci forme un canal annulaire 38 à l'intérieur de l'espace annulaire 40 qui est en communication avec chacune des tubulures 24. Dans ce mode de réalisation, le réfrigérant de secours fourni par l'intermédiaire des tubulures 24 s'écoule vers le bas dans le canal 38 le long de la surface externe de l'enveloppe de coeur 36. Ceci permet de contribuer à la réduction du risque de perte du réfrigérant de secours avant qu'il n'atteigne le coeur 26 si l'accident de perte de réfrigérant primaire est dû à une rupture d'une branche froide 28 par laquelle de l'eau de refroidissement primaire est introduite dans la cuve 11, ou d'une branche chaude 30 du réacteur par laquelle l'eau de refroidissement primaire échauffée au contact du coeur 26 est évacuée de la cuve 11. Le cylindre 34 peut être pourvu d'une série de trous 42 autour de sa partie périphérique supérieure qui agissent comme casse-siphons dans le cas d'une rupture ou d'une fuite sur la tubulure d'injection 24 ou la ligne de fourniture de réfrigérant de secours 22.

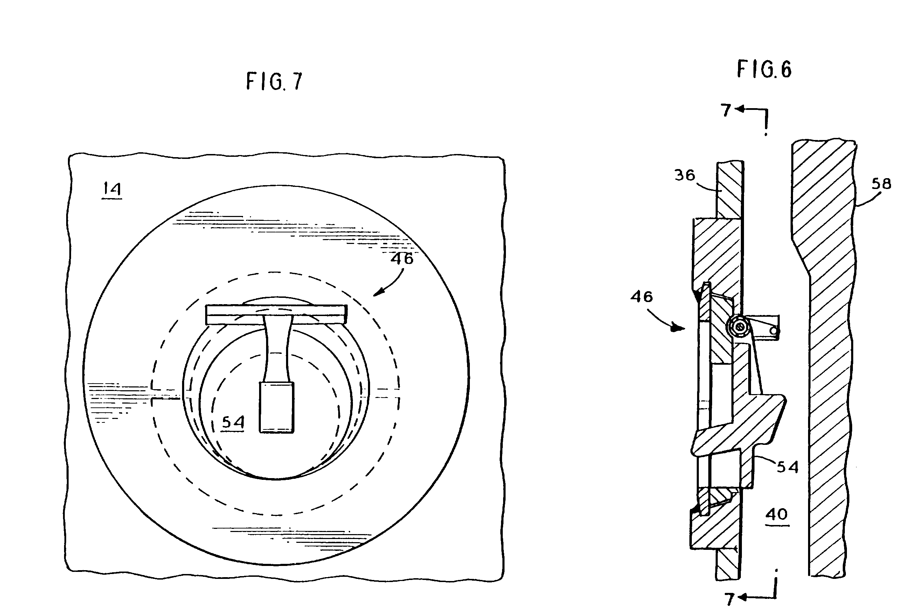

Quand un accident de perte de réfrigérant primaire résulte d'une brèche dans la partie d'entrée 28 d'une branche froide ou dans la canalisation de la branche froide, une vaporisation éclair peut se produire en quelques secondes. La vapeur produite dans le coeur 26 qui se répand dans le plenum supérieur de la cuve peut créer des difficultés pour amener le réfrigérant de secours au coeur 26. Des clapets 46 faisant partie des équipements internes du réacteur tels qu'illustrés schématiquement sur les figures 2, 6 et 7 permettent une évacuation rapide de la vapeur à partir du plenum supérieur et du coeur 26 pour favoriser l'alimentation du coeur en réfrigérant de secours. Les clapets 46 des équipements internes sont montés sur l'enveloppe de coeur 36 avec le disque 54 dans une position normalement fermée. Dans le cas d'un accident par perte de réfrigérant primaire, une différence de pression est créée de part et d'autre du disque, ce qui entraîne l'ouverture du disque et crée une circulation à partir du coeur vers le plenum supérieur à travers les clapets 54 et à l'intérieur de l'espace annulaire 40 de la cuve du réacteur. A partir de l'espace annulaire 40, le fluide s'écoulant à travers le clapet 54 peut s'écouler directement vers la brèche de la branche froide 28. Ce trajet direct permet d'évacuer rapidement la vapeur du plenum supérieur et du coeur et favorise l'alimentation du coeur en réfrigérant de secours.

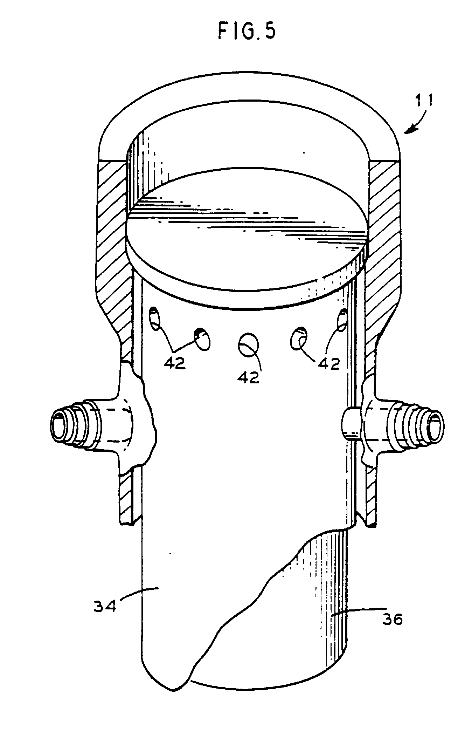

La figure 4 illustre une autre caractéristique qui peut être apportée à la cuve du réacteur 11 pour réduire la vitesse de perte de réfrigérant du réacteur à la suite d'un accident de perte de réfrigérant primaire. Chacune des entrées 28 des branches froides peut être pourvue d'un dispositif de restriction de débit 60 sous la forme d'une section réduite qui n'affecte pas le fonctionnement normal du réacteur. En se reportant à la figure 1, on voit le réservoir à haute pression 12 qui est un réservoir sous pression conçu de manière à fournir du réfrigérant à la cuve du réacteur 11 d'une manière passive. Ceci est obtenu en mettant le réservoir 12 sous une haute pression en utilisant un gaz inerte tel que l'azote. Le réservoir haute pression 12 fournit du réfrigérant par l'intermédiaire des lignes d'alimentation en réfrigérant de secours 22 à une ou plusieurs tubulures d'injection 24.

Dans le cas de l'invention, le réservoir haute pression 12 est la première source de réfrigérant de secours puisque la haute pression permet une injection rapide de réfrigérant dans le coeur pendant les premières secondes critiques d'un accident de perte de réfrigérant primaire. Il est important que la haute pression du réservoir de noyage du coeur soit prévue de manière à fournir le réfrigérant de secours à l'entrée du coeur et à l'espace annulaire avant ou à peu près au moment où la vaporisation éclair se produit dans ces zones. De plus, il faut prévoir un volume de réfrigérant de secours suffisant pour que le réservoir d'alimentation du coeur à basse pression se mette en fonctionnement avant ou à peu près au moment où le réservoir de noyage du coeur à haute pression se vide, pour assurer une fourniture continue de réfrigérant de secours.

La seconde source de réfrigérant de secours est constituée par le réservoir de stockage à basse pression 14. Le réservoir de stockage 14 est semblable au réservoir 12 en ce qu'il est constitué par un réservoir sous pression contenant du réfrigérant de secours qui est également mis sous pression par un gaz inerte. Le réservoir 14 peut être maintenu à une pression inférieure à la pression du réservoir 12 du fait d'un besoin moins critique d'un apport rapide de réfrigérant au moment où commence la fourniture de réfrigérant de secours à partir du réservoir 14. Le réservoir 14 fournit du réfrigérant à une ou plusieurs tubulures 24 par l'intermédiaire des lignes d'alimentation en réfrigérant de secours 22, la fourniture de réfrigérant à partir du réservoir 14 commençant un peu avant que le réservoir 12 ne se soit vidé, de manière à empêcher une interruption du débit de réfrigérant de secours. Le réservoir à basse pression de noyage du coeur est conçu de manière telle que, soit le réservoir d'alimentation par gravité 16, soit l'injection par pompage est mis en fonctionnement avant que le réservoir à basse pression de noyage du coeur ne se soit vidé.

La troisième source de réfrigérant de secours qui commence à fournir du réfrigérant peu avant que le réservoir 14 ne se soit vidé est constituée par un ou plusieurs réservoirs d'alimentation par gravité 16. Les réservoirs d'alimentation par gravité 16 fournissent du réfrigérant de secours à une ou plusieurs tubulures d'injection 24 par l'intermédiaire des lignes d'alimentation en réfrigérant de secours 22. Dans le cas de l'art antérieur, les réservoirs d'alimentation qui sont utilisés pour stocker et fournir du réfrigérant de secours par pompage et injection à un réacteur nucléaire sont généralement des réservoirs de stockage d'eau borée et sont situés à l'extérieur du bâtiment qui contient le réacteur nucléaire. Dans le cas de l'invention, les réservoirs d'alimentation par gravité 16 sont situés à l'intérieur du bâtiment du réacteur. De manière à favoriser la diminution de la pression du circuit de refroidissement du réacteur jusqu'à une valeur suffisamment basse pour que le réfrigérant de secours s'écoule à partir du réservoir d'alimentation par gravité vers le système de refroidissement, des vannes automatiques de dépressurisation 68, 70 sont installées sur chacune des branches chaudes du circuit de refroidissement ou sur le pressuriseur. Le dispositif de dépressurisation est constitué par une vanne d'isolement 68 et une vanne de dépressurisation 70. Les vannes 68 et 70 peuvent être commandées manuellement à distance par les opérateurs en charge de l'installation, à partir de la salle de commande ou encore les vannes 68 et 70 peuvent être commandées automatiquement par des signaux de pression redondants de dispositifs du réacteur conformes aux règles ou dispositions de sûreté. La source suivante de fourniture de réfrigérant de secours est constituée par un ou plusieurs puits de récupération 18 à l'intérieur du bâtiment du réacteur qui récupèrent le réfrigérant qui a fui à l'intérieur du bâtiment du réacteur, que ce réfrigérant soit du réfrigérant primaire ou de secours. Les pompes 62 fournissent le réfrigérant récupéré par les puits 18 à une ou plusieurs tubulures d'injection 24 par l'intermédiaire des lignes d'alimentation en réfrigérant de secours 22.

Pendant le fonctionnement du réacteur, les clapets 66 de la tuyauterie isolent les réservoirs 12, 14, 16 et 18 du circuit de refroidissement du réacteur 11. Au cours de la décroissance de la pression dans le circuit de refroidissement du réacteur, à la suite d'une rupture d'une canalisation, la pression dans les réservoirs 12 à 16 devient plus élevée que la pression dans le circuit de refroidissement du réacteur, ce qui a pour résultat que le réfrigérant de secours s'écoule à partir des réservoirs 12 à 16 vers la partie inférieure du coeur par l'intermédiaire des conduites 22' d'alimentation en réfrigérant de secours, des vannes d'isolement 64 et des clapets anti-retour 66 à l'état ouvert, des lignes 22, des tubulures d'injection 24 et du canal d'injection 38. Du fait de la vaporisation éclair et de l'ébullition dans le coeur 26, de la vapeur est produite et s'écoule dans la région du plenum supérieur 44. Pour un accident de perte de réfrigérant primaire produit par une brèche de grande ou de petite taille dans une branche froide 28, les clapets 46 des équipements internes du réacteur (figures 2, 6 et 7) sont prévus pour produire une ouverture rapide du trajet direct entre la région du plenum supérieur 44 et la brèche dans la branche froide 28. Ce trajet direct permet d'évacuer rapidement la vapeur du plenum supérieur 44 et du coeur 26 et favorise l'alimentation du coeur en réfrigérant de secours pour tout accident de perte de réfrigérant primaire. Peu avant que le réservoir à haute pression se soit vidé, la pression du réfrigérant du réacteur décroît jusqu'à une valeur située en-dessous de la pression du réservoir à basse pression 14, il en résulte un écoulement de réfrigérant à partir du réservoir à basse pression vers la partie inférieure du coeur au moyen des conduites d'injection 22, des tubulures 24 du réacteur et du canal d'injection 38 de l'enveloppe de coeur. Peu avant que le réservoir à basse pression 14 se vide, la pression du réfrigérant du réacteur diminue encore pour prendre une valeur en-dessous de celle du réservoir d'écoulement par gravité placé dans une position élevée, ce qui permet d'obtenir un écoulement additionnel passif de réfrigérant de secours vers l'entrée 54 du coeur du réacteur, suivant le trajet d'injection du réfrigérant de secours décrit ci-dessus. Le contenu d'eau initial du circuit de refroidissement du réacteur et le réfrigérant de secours injecté à partir des réservoirs 12 à 16 sont récupérés dans le ou les puits de récupération du bâtiment du réacteur. Dans le cas où les réservoirs 16 à écoulement par gravité se vident et à ce moment (c'est-à-dire des heures après l'événement initial), les pompes 62 peuvent être actionnées pour fournir du réfrigérant de secours à partir des puits de récupération 18 à l'entrée du coeur 26, par l'intermédiaire du trajet d'écoulement de réfrigérant de secours décrit auparavant.

Sur les parties des lignes de pompage 22' du circuit de refroidissement de secours reliées aux lignes d'alimentation 22 et recevant le liquide réfrigérant récupéré et pompé dans le bâtiment du réacteur, peuvent être disposés des échangeurs de chaleur 71 (figure 1) qui permettent de refroidir le fluide réfrigérant récupéré pour accroître l'effet de refroidissement obtenu lors de l'injection du fluide réfrigérant récupéré, à l'intérieur de la cuve.

Le dispositif et le procédé suivant l'invention permettent donc d'assurer à la fois une réalimentation et un refroidissement efficace du coeur immédiatement après l'apparition de l'accident de perte de réfrigérant et un refroidissement du coeur sur une période étalée dans le temps, par déclenchement successif de capacités de stockage ou de circuits de pompage de fluide réfrigérant. En outre, le fluide réfrigérant de secours est amené directement à la base du coeur de sorte qu'il assure sa fonction de renoyage et de refroidissement du coeur de manière sûre, en évitant une évacuation prématurée du réfrigérant par une brèche du circuit primaire.

L'invention ne se limite pas au mode de réalisation qui a été décrit.

Le dispositif et le procédé de refroidissement du réacteur nucléaire suivant l'invention ont été décrits dans le cas d'un réacteur nucléaire à eau sous pression. Cependant, ce dispositif et ce procédé pourraient être appliqués à tout réacteur nucléaire refroidi à l'eau dont le coeur est disposé à l'intérieur d'une cuve et entouré par une enveloppe de coeur. Le dispositif et le procédé de refroidissement du réacteur nucléaire suivant l'invention qui ont été décrits mettent en oeuvre deux réservoirs de stockage à des pressions différentes, un réservoir assurant une alimentation par gravité et un circuit de récupération et de pompage du réfrigérant. Bien entendu, on peut imaginer des ensembles différents de moyens d'alimentation de la ou des tubulures d'injection, ces ensembles comportant au moins deux moyens d'alimentation de la tubulure en fluide réfrigérant de refroidissement à des pressions différentes.

Les lignes d'alimentation du dispositif de refroidissement peuvent comporter des moyens d'arrêt et d'ouverture différents des vannes et clapets qui ont été décrits.

## Revendications

1. Réacteur nucléaire comportant une cuve (11) ayant une pluralité d'ouvertures (28, 29) d'entrée et de sortie de fluide réfrigérant et une enveloppe de coeur (36) à l'intérieur de la cuve (11), caractérisé en ce qu'il comporte :
- a) un cylindre (34) placé à l'intérieur de la cuve (11) du réacteur, autour de l'enveloppe de coeur (36) pour définir un canal annulaire (38) entre l'enveloppe de coeur (36) et le cylindre (34),
- b) au moins une tubulure (24) d'injection à travers la paroi de la cuve (11) en communication avec le canal annulaire (38) défini entre l'enveloppe de coeur (36) et le cylindre (34), et
- c) des moyens d'alimentation de la/des tubulure/s d'injection (24) en fluide de refroidissement de secours à des pressions d'alimentation différentes, constitués par un réservoir à haute pression (12), un réservoir à basse pression (14), au moins un réservoir à alimentation par gravité (16) disposés à l'intérieur du bâtiment du réacteur nucléaire et au moins un puits de récupération (18) disposé à l'intérieur du bâtiment du réacteur nucléaire, le réservoir à haute pression (12), le réservoir à basse pression (14), le réservoir à alimentation par gravité (16) et le puits de récupération (18) étant reliés par l'intermédiaire d'au moins une ligne d'alimentation (22), à la/les tubulure/s d'injection (24).

2. Réacteur nucléaire suivant la revendication 1, caractérisé par le fait que le puits de récupération (18) est relié à une ligne d'alimentation (22) de la tubulure d'injection (24), par l'intermédiaire d'une ligne de pompage (22') sur laquelle est disposée une pompe (62).

3. Réacteur nucléaire suivant l'une quelconque des revendications 1 et 2, caractérisé par le fait qu'il comporte un circuit de refroidissement normal par un réfrigérant sous haute pression et des moyens (70) de dépressurisation du circuit de refroidissement du réacteur nucléaire.

4. Réacteur nucléaire suivant l'une quelconque des revendications 1 et 2, caractérisé par le fait que des moyens de retenue tels que des clapets (66) et des vannes (64) sont disposés sur des conduites de liaison (22') des moyens d'alimentation (12, 14, 16, 18) aux lignes d'alimentation (22) de la tubulure d'injection (24).

5. Réacteur nucléaire suivant l'une quelconque des revendications 1 à 4, caractérisé en ce que la tubulure d'injection (24) comporte un orifice de restriction de débit (32).

6. Réacteur nucléaire suivant l'une quelconque des revendications 1 à 5, caractérisé en ce que les ouvertures d'entrée (28) du fluide réfrigérant dans la cuve (11) du réacteur nucléaire comportent chacune un orifice de restriction de débit (60).

7. Réacteur nucléaire suivant l'une quelconque des revendications 1 à 6, caractérisé en ce qu'au moins un clapet de retenue (46, 54) est disposé dans une ouverture traversant l'enveloppe de coeur (36) dans sa partie supérieure au niveau d'un plenum supérieur (44) de la cuve (11) du réacteur nucléaire, mettant en communication le plenum supérieur (44) avec un espace annulaire (40) de la cuve (11) disposé autour de l'enveloppe de coeur (36) et communiquant avec les ouvertures d'entrée de fluide de refroidissement (28) de la cuve (11) du réacteur.

8. Réacteur nucléaire suivant l'une quelconque des revendications 1 à 7, caractérisé par le fait que le cylindre (34) comporte une pluralité d'ouvertures traversantes (42) espacées les unes des autres suivant la direction circonférentielle et disposées dans la partie supérieure du cylindre (34).

9. Procédé de refroidissement de secours d'un réacteur nucléaire comportant une cuve (11) et un circuit de refroidissement renfermant un fluide réfrigérant sous pression, disposés à l'intérieur d'un bâtiment du réacteur nucléaire, caractérisé en ce que, dans le cas d'un accident survenant sur le circuit de refroidissement sous pression du réacteur nucléaire, on injecte à l'intérieur de la cuve (11), à la base (54) du coeur (26) du réacteur, un fluide de refroidissement de secours, le fluide de refroidissement de secours étant fourni successivement par des moyens (12, 14, 16, 18) d'alimentation à des pressions différentes disposés dans le bâtiment du réacteur, au cours des étapes successives suivantes :
- à la suite de l'accident sur le circuit de refroidissement sous pression du réacteur nucléaire, on injecte dans la cuve (11) du fluide de refroidissement provenant d'un réservoir à haute pression (12),
- on injecte du fluide de refroidissement provenant d'un second réservoir à basse pression (14), peu avant que le premier réservoir à haute pression (12) ne se soit vidé,
- on injecte du fluide de refroidissement provenant d'un réservoir (16) d'alimentation par gravité disposé à l'intérieur du bâtiment du réacteur, peu avant que le second réservoir à basse pression (14) ne se soit vidé, et
- on injecte dans la cuve (11) du fluide de refroidissement récupéré dans le bâtiment du réacteur nucléaire et mis en circulation par pompage.

## Patentansprüche

1. Kernreaktor, der einen Behälter (11) mit mehreren Eingangs- und Ausgangsöffnungen (28, 29) für Kühlfluid und im Inneren des Behälters (11) eine Kernhülle (36) aufweist, dadurch gekennzeichnet, daß er aufweist:
- a) einen Zylinder (34), der im Inneren des Reaktorbehälters (11) um die Kernhülle (36) angeordnet ist, um einen ringförmigen Kanal (38) zwischen der Kernhülle (36) und dem Zylinder (34) zu bilden,
- b) mindestens einen Einspritzstutzen (24), der durch die Wand des Behälters (11) geht und in Verbindung mit dem ringförmigen Kanal (38) steht, der zwischen der Kernhülle (36) und dem Zylinder (34) besteht, und
- c) eine Einrichtung zur Versorgung des/der Einspritzstutzen/s (24) mit einem Hilfskühlfluid mit unterschiedlichen Versorgungsdrücken, die durch einen Hochdruck-Behälter (12), einen Niedrigdruck-Behälter (14), mindestens einen Schwerkraftversorgungs-Behälter (16), der im Inneren des Kernreaktorgebäudes angeordnet ist, und mindestens einen Rückgewinnungsschacht (18), der im Inneren des Kernreaktorgebäudes angeordnet ist, gebildet wird wobei der Hochdruck-Behälter (12), der Niedrigdruck-Behälter (14), der Schwerkraftversorgungs-Behälter (16) und der Rückgewinnungsschacht (18) mit mindestens einer Versorgungsleitung (22) mit dem/den Einspritzstutzen (24) verbunden sind.

2. Kernreaktor nach Anspruch 1, dadurch gekennzeichnet, daß der Rückgewinnungsschacht (18) über eine Pumpleitung (22'), in der eine Pumpe (62) angebracht ist, an eine Versorgungsleitung (22) des Einspritzstutzens (24) angeschlossen ist.

3. Kernreaktor nach einem der Ansprüche 1 oder 2, dadurch gekennzeichnet, daß er einen normalen Kühlkreislauf aufweist, der mit einem Kühlfluid unter hohem Druck arbeitet, und eine Druckablaßeinrichtung (70) für den Kühlkreislauf des Kernreaktors.

4. Kernreaktor nach einem der Ansprüche 1 oder 2, dadurch gekennzeichnet, daß Rückhalteeinrichtungen, etwa Rückschlagventile (66) oder Schieber (64), in den Verbindungsleitungen (22') angebracht sind, die die Versorgungseinrichtung (12, 14, 16, 18) mit den Versorgungsleitungen (22) des Einspritzstutzens (24) verbinden.

5. Kernreaktor nach einem der Ansprüche 1 bis 4, dadurch gekennzeichnet, daß der Einspritzstutzen (24) eine Öffnung für die Begrenzung der Durchflußmenge (32) umfaßt.

6. Kernreaktor nach einem der Ansprüche 1 bis 5, dadurch gekennzeichnet, daß die Eingangsöffnungen (28) des Kühlfluids im Kernreaktorbehälter (11) jede eine Öffnung für die Begrenzung der Durchflußmenge (60) aufweisen.

7. Kernreaktor nach einem der Ansprüche 1 bis 6, dadurch gekennzeichnet, daß mindestens ein Rückhalteventil (46, 54) in einer öffnung angeordnet ist, die durch die Kernhülle (36) in ihrem oberen Bereich auf der Höhe einer oberen Kammer (44) des Kernreaktorbehälters (11) geht, die die obere Kammer (44) mit dem ringförmigen Zwischenraum (40) des Behälters (11) verbindet, der um die Kernhülle (36) angeordnet ist und die mit den Eingangsöffnungen (28) des Kühlfluids des Reaktorbehälters (11) in Verbindung steht.

8. Kernreaktor nach einem der Ansprüche 1 bis 7, dadurch gekennzeichnet, daß der Zylinder (34) mehrere durchgehende Öffnungen (42) umfaßt, die in Umfangsrichtung voneinander beabstandet und im oberen Bereich des Zylinders (34) angebracht sind.

9. Verfahren zur Hilfskühlung eines Kernreaktors, der einen Behälter (11) und einen Kühlkreislauf umfaßt, der ein Kühlfluid unter Druck einschließt, die im Inneren des Kernreaktorgebäudes angeordnet sind, dadurch gekennzeichnet, daß im Falle einer Störung, die sich im unter Druck stehenden Kühlkreislauf des Kernreaktors ergibt, man im Inneren des Behälters (11) in die Basis (54) des Reaktorkerns (26) ein Fluid für die Hilfskühlung einspritzt, wobei dieses Fluid für die Hilfskühlung nacheinander durch eine Versorgungseinrichtung (12, 14, 16, 18), die im Reaktorgebäude angeordnet ist, mit unterschiedlichen Drücken während der aufeinanderfolgenden nachstehenden Schritte geliefert wird:
- nach einer Störung im unter Druck stehenden Kühlkreislauf des Kernreaktors spritzt man in den Behälter (11) ein Kühlfluid ein, das aus dem Hochdruck-Behälter (12) stammt,
- man spritzt ein Kühlfluid ein, das aus einem zweiten Niedrigdruck-Behälter (14) stammt, kurz bevor der erste Hochdruck-Behälter (12) sich geleert hat,
- man spritzt ein Kühlfluid ein, die aus einem Schwerkraftversorgungs-Behälter (16) stammt, der im Inneren des Reaktorgebäudes angeordnet ist, kurz bevor sich der zweite Niedrigdruck-Behälter (14) geleert hat, und
- man spritzt in den Behälter (11) ein Kühlfluid ein, das im Kernreaktorgebäude zurückgewonnen wurde und durch ein Pumpensystem umgewälzt wird.

## Claims

1. A nuclear reactor comprising a vessel (11) having a plurality of input and output openings (28, 29 [sic - 30]) for cooling fluid, and a core jacket (36) inside the vessel (11), characterised in that it comprises:
- a) a cylinder (34) placed inside the vessel (11) of the reactor around the core jacket (36) so as to form an annular channel (38) between the core jacket (36) and the cylinder (34),
- b) at least one injection pipe (24) extending through the wall of the vessel (11) and communicating with the annular channel (38) formed between the core jacket (36) and the cylinder (34), and
- c) means for supplying the injection pipe(s) (24) with ermergency cooling fluid at various feed pressures, comprising a high-pressure reservoir (12), a low-pressure reservoir (14), at least one gravity-feed reservoir (16) provided inside the nuclear reactor building and at least one collecting tank (18) provided inside the nuclear reactor building, the high-pressure reservoir (12), the low-pressure reservoir (14), the gravity-feed reservoir (16) and the collecting tank (18) being connected by means of at least one supply line (22) to the injection pipe(s) (24).

2. A nuclear reactor according to claim 1, characterised in that the collecting tank (18) is connected to a supply line (22) of the injection pipe (24) via a pumping line (22'), in which is arranged a pump (62).

3. A nuclear reactor according to either one of claims 1 and 2, characterised in that it comprises a circuit for normal cooling by means of a highly-pressurised coolant, and means (70) for depressurisation of the cooling circuit of the nuclear reactor.

4. A nuclear reactor according to either one of claims 1 and 2, characterised in that retaining means such as flap valves (66) and gate valves (64) are provided in lines (22') for connecting the supply means (12, 14, 16, 18) to the supply lines (22) of the injection pipe (24).

5. A nuclear reactor according to any one of claims 1 to 4, characterised in that the injection pipe (24) comprises a flow restriction orifice (32).

6. A nuclear reactor according to any one of claims 1 to 5, characterised in that the input openings (28) for the cooling fluid in the vessel (11) of the nuclear reactor each comprise a flow restriction orifice (60).

7. A nuclear reactor according to any one of claims 1 to 6, characterised in that at least one non-return valve (46, 54) is provided in an opening extending through the core jacket (36) in its upper portion at the level of an upper plenum (44) of the vessel (11) of the nuclear reactor, connecting the upper plenum (44) to an annular space (40) provided in the vessel (11) around the core jacket (36) and communicating with the cooling-fluid input openings (28) in the vessel (11) of the reactor.

8. A nuclear reactor according to any one of claims 1 to 7, characterised in that the cylinder (34) comprises a plurality of through openings (42) spaced apart in the circumferential direction and provided in the upper portion of the cylinder (34).

9. An emergency cooling process for a nuclear reactor comprising a vessel (11) and a cooling circuit containing a pressurised cooling fluid, provided inside a nuclear reactor building, characterised in that, in the event of an accident occurring in the pressurised cooling circuit of the nuclear reactor, an emergency cooling fluid is injected into the vessel (11) at the base (54) of the core (26) of the reactor, the emergency cooling fluid being provided successively by means (12, 14, 16, 18) provided in the reactor building and for supplying the fluid at various pressures during the course of the following successive steps:
- following an accident in the pressurised cooling circuit of the nuclear reactor, cooling fluid from a high-pressure reservoir (12) is injected into the vessel (11);
- cooling fluid from a second, low-pressure reservoir (14) is injected just before the first, high-pressure reservoir (12) is emptied;
- cooling fluid from a gravity-feed reservoir (16), provided inside the reactor building, is injected just before the second low-pressure reservoir (14) is emptied, and
- cooling fluid, collected in the nuclear reactor building and circulated by pumping, is injected into the vessel (11).
